# EUROPEAN PATENT SPECIFICATION

(11) **EP 1 457 934 B1**
(45) Date of publication and mention of the grant of the patent: **12.09.2007**
(21) Application number: 04001028.2
(22) Date of filing: 19.01.2004
(51) Int. Cl.: G07D 7/06

(54) **Sheet handling apparatus with amplification control of detectors**
Dokumentenverarbeitungsgerät mit Detektoren-Verstärkungssteuerung
Appareil de traitement de feuilles avec contrôle d'amplification des détecteurs

(30) Priority: 14.03.2003 JP 2003069287
(43) Date of publication of application: 15.09.2004
(73) Proprietor: Hitachi-Omron Terminal Solutions, Corp., Tokyo (JP)
(72) Inventor: Nakabayashi, Muneharu, Hitachi Ltd. Int.Prop.Group, Chiyoda-ku Tokyo 100-8220 (JP); Mori, Akira, Hitachi Ltd., Intel. Prop. Group, Chiyoda-ku Tokyo 100-8220 (JP); Kanou, Mitsunari, Hitachi Ltd., Intel. Prop. Group, Chiyoda-ku Tokyo 100-8220 (JP)
(74) Representative: Strehl Schübel-Hopf & Partner

(56) References cited:
- US-A- 4 769 532
- US-A- 5 255 129
- US-B1- 6 229 306
- PATENT ABSTRACTS OF JAPAN vol. 2002, no. 07, 3 July 2002 (2002-07-03) & JP 2002 074448 A (SANDEN CORP), 15 March 2002 (2002-03-15)

## Description

### BACKGROUND OF THE INVENTION

### Field of the Invention

The present invention relates to a sheet handling apparatus, and more particularly to improvement in truth determination capability in automatic teller machines (hereinafter referred to as ATM), automatic exchange machines, and other machines handling bills.

A sheet handling apparatus such as ATM usually handles plural types of bills and determines the denominations and truth of the bills in a determining unit. Bills determined as false in the determining unit are ejected from the machine and returned to the user so that it is not captured by the ATM. This has been a conventional practice. On the other hand, there has been an increasing demand for a system which does not return False bills to users to identify the users of the False bills and hold the used False bills as evidence. A circulation-type ATM uses bills inputted from users as bills for payment and requires less maintenance operations such as addition of lacking bills and withdrawal of bills from a bill stocking chamber, in comparison with a non-circulation-type ATM. To improve the use efficiency of the circulation-type ATM, it is desirable to use bills inputted to the machine as bills for payment whenever possible, but at the same time it is necessary to avoid the output of False bills, requiring improvement in the capability to determine the truth of bills.

This type of technology is disclosed in Japanese Published Unexamined Patent Application No. Hei 10-302112 (Reference 1) . According to the technology, when a bill is determined as false by a determining part, the bill is not rejected and determined again after the speed of transporting the bill is decreased.

According to the technology disclosed in Japanese Published Unexamined Patent Application No. 2000-348234 (Reference 2), a terminal for a medium determining system is provided with a simple truth determining means, which transfers the data for determining the truth of a medium to a host computer to perform detailed truth determination.

US 6 229 306 B discloses an apparatus for measuring magnetic properties of sheet material with both, low and high magnetic particle densities. It is suggested to provide an amplifier having at least two amplification levels and to shift the magnetic measuring signal such that the low mag-' netic particle density of the sheet material is amplified by the higher amplification level. The two-part form of appended claim 1 is based on this document.

Related prior art is also described in US 4 769 532 A, US 5 255 129 A, and JP 2002-074448.

### SUMMARY OF THE INVENTION

However, the technology of the Reference 1 has a problem in that, since the speed of transporting the bill is decreased to perform redetermination, more time is required for processing. The technology of the Reference 2 has a problem in that, since bill input processing in the terminal is terminated for detailed determination by the host computer, much time is consumed before the redetermination is performed.

A conceivable method for solving such problems is to use the same determining method used in a host computer in terminals so that the terminals perform detailed determination. In this case, for the denominations of bills that can be inputted to a bill input port, or the denominations of bills received by at least sheet handling apparatus, truth determination must be performed without fail, and it is desirable to widen the range (hereinafter referred to as a dynamic range) of signals to be sensed to get the characteristics of sheets used for determination. However, if a dynamic range is widened when an identical A/D converter is used, the unit of quantizing signals may become larger, and it may become more difficult to get detailed characteristics of sheets, in comparison with the case of narrower dynamic ranges.

An object of the present invention is to provide a sheet handling apparatus that can accurately determine the truth of sheets.

Another object of the present invention is to increase the capability to determine bills determined as unidentified as a result of determining the truth of bills to improve the truth determination capability. The objects are met by the invention defined in the present claims.

The present invention is constructed so that, if sheets are determined as unidentified as a result of truth determination in a determining part, the settings of the amplification factor or resolution of a detector is changed to increase the capability to determine the truth of the sheets, and the unidentified sheets are again subjected to truth determination in the determining part.

Specifically, a sheet handling apparatus according to an embodiment of the present invention includes: a detector that detects a characteristic of a sheet transported by a transport module; an amplifier that amplifies a signal obtained from the detector; an analog-to-digital converter (A/D converter) that converts an analog signal amplified in the amplifier to a digital signal; determining means that determine the truth of the sheet by use of a signal having been produced as a result of A/D conversion by the A/D converter; and a control part that changes signal read accuracy of the detector. With this construction, if a sheet is determined as unidentified in the determining means, the control part changes a setting of conditions so that a capability to determine the sheet is higher, and transports the sheet determined as unidentified to the detector so that the truth determination is performed again in the determining means.

In a preferred example, the control part changes the amplification factor of the amplifier or the input range of the A/D converter. For example, it is desirable that the amplification factor is changed correspondingly to the denominations of bills.

The present invention also relates to a method of determining bills as defined in claim 4. According to an embodiment, the method of determining bills in a bill handling apparatus includes the steps of : sending a bill to a determining part to perform determination; detecting characteristics of the bill by a detector; processing a signal from the detector and determining the truth of the bill; as a result of the truth determination, classifying the bill into one of at least four types of bills to process the bill, the four types of bills being true bills determined as true, false bills lacking characteristics indispensable to true bills, unidentified bills having characteristics indispensable to true bills but exceeding a permissible error thereof, and undefined bills the denominations of which cannot be determined; if the bill is determined as an unidentified bill, changing a signal amplification factor or resolution of the detector so as to increase accuracy to determine the bill; and after the change, sending the unidentified bill to the determining part again to detect the characteristics of the bill in the detection part.

### DETAILED DESCRIPTION OF THE PREFERRED EMBODIMENT

Hereinafter, the present invention is described using embodiments.

A deposit/withdrawal part is a place where an ATM user inputs bills. A bill separating part separates inputted bills one by one. There is also a transport path through which bills are transported. A determining part determines the denomination of a bill and whether it is true or false. There is a sensor such as an optical sensor and a magnetic sensor placed within the determining part to detect the characteristics of bills. Further, there is a temporary stocking part for temporarily holding bills, a return transport path (simply referred to as a transport path) for returning a bill to the ATM user, and a bill storing chamber (hereinafter simply referred to as a storing chamber) for storing bills. The storing chamber consists of plural storing chambers, and according to the result of checking a bill in the determining part, the bill is stored in one of the storing chambers for reject bills, 1,000-yen bills, 5,000-yen bills, and 10,000-yen bills. For an ATM of circulation type, bills not circulated are stored in the storing chamber for rejected bills, and bills used for circulation are stored in the storing chambers for 1,000-yen to 10,000-yen bills . The transport path is a transport path in the vicinity of the deposit/withdrawal part and particularly indicates a portion transporting unidentified bills described later during redetermination.

During deposit transaction, when the ATM user inputs one or plural bills to the deposit/withdrawal part, the bill separating part installed in the deposit/withdrawal part separates the bills one by one. The separated bills are sent to the determining part through the transport path. The determining part detects the characteristics of the bill by the sensor and determines the denomination of the bill and whether it is true or false, from the characteristics of the bill. According to the determination result in the determining part, the bill is classified to one of the four types of true bills, false bills, unidentified bills, and undefined bills.

True bills are bills determined to be true. False bills are bills lacking the characteristics of true bills. Unidentified bills are bills that have the characteristics of true bills but are out of the range of a permissible error. Undefined bills are bills whose denomination cannot be determined, and include transport errors, bent bills, torn bills, and the like.

Processing of the unidentified bills is characteristically performed in the present embodiment. The unidentified bills are those determined to be out of a permissible range because of dirty bills or variations in the sensitivity and the performance capabilities of the sensor of the determining part though they were determined to be within a permissible range with respect to the sizes of 1,000-yen, 5,000-yen, and 10,000-yen bills and their designs.

Next, a description is made of the operation of the determining processing for bills classified to the abovementioned four types.

Bills set in the deposit/withdrawal part are separated one by one in the separating part, and transported to the determining part. The determining part determines the denomination of the bills and whether they are true or false (first mode). A bill determined as an unidentified bill by the truth determination is transported to the deposit/withdrawal part through the return transport path. According to the present embodiment, the condition setting of the sensor of the determining part is changed so that the capability to determine bills becomes higher, in other words, the detection accuracy of the sensor becomes higher, and a bill determined as an unidentified bill is determined again in the determining part. An example of condition change will be described later.

The bill returned to the vicinity of the deposit/withdrawal part is transported to the determining part again through the transport path, where it is again checked for its denomination and to see whether it is true or false (second mode). If the bill is determined as a false or undefined bill by the truth determination (the first mode and the second mode) in the determining part, the bill is transported to the deposit/withdrawal part and returned to the user. If it is determined as a true bill in the determining part, the bill is temporarily held in the temporary stocking part. When the user refers to a total amount displayed on the guidance screen and inputs confirmation of an inputted amount, the bills are stored in the bill storing chamber. If the user selects cancellation on the guidance screen, the bills temporarily stored in the temporary stocking part are returned to the deposit/withdrawal part (the following is the same as the above).

Next, a description is made of the operation of the determining processing for the bills classified to the abovementioned four types. The determining processing denotes another embodiment. Characteristic points are that unidentified bills are counted, and changes of the condition settings of the determining part are different.

Bills set in the deposit/withdrawal part are separated one by one in the separating part, and transported to the determining part. The determining part determines the denomination of the bills and whether they are true or false (first mode). A bill determined as an unidentified bill by the truth determination is transported to the deposit/withdrawal part 101 through the return transport path. According to the present embodiment, the condition setting of the sensor of the determining part is changed so that the capability to determine bills becomes higher, in other words, the detection accuracy of the sensor become higher, and a bill determined as an unidentified bill is checked again in the determining part. An example of condition change will be described later. The bill returned to the deposit/withdrawal part is transported to the determining part again, where it is again checked for its denomination and to see whether it is true or false (second mode). If the bill is determined as a false or undefined bill by the truth determination (the first mode and the second mode) in the determining part, the bill is transported to the deposit/withdrawal part and returned to the user. If it is determined as a true bill in the determining part, the bill is temporarily held in the temporary stocking part. When the user refers to a total amount displayed on the guidance screen and inputs confirmation of an inputted amount, the bills are stored in the bill storing chamber.

If the bill is determined as an unidentified bill in the second mode, that is, it is determined as an unidentified bill again as a result of the re-determination, the bill is not transported again to the deposit/withdrawal part and control proceeds to false/undefined bill determination steps , where the bill is returned to the user as a false or undefined bill. The deposit/withdrawal part has a facility that separates bills before the first mode is applied from bills determined as unidentified bills, False bills, and undefined bills in the first mode (or the second mode), thereby preventing coexistence of the former and the latter. In the aforementioned embodiments, all bills determined as unidentified bills, false bills, and undefined bills in the first mode are transported to the deposit/withdrawal part. However, all of them may be transported again in the second mode, or only unidentified bills may be transported in the second mode, and false bills and undefined bills may not be transported in the second mode.

The aforementioned embodiments describe a method for increasing determination accuracy in the case where bills stored in the storing chamber are limited to True bills. Instead of returning undefined bills to the user in the example above, a storing chamber may be provided to store the undefined bills. For example, one of the plural storing chambers may be used for undefined bills.

Next, a description will be made of another embodiment of bill determining processing.

Bills set in the deposit/withdrawal part are separated one by one in the separating part, and transported to the determining part. The determining part determines the denomination of the bills and whether they are true or false. A bill determined as an unidentified bill by the truth determination is transported to the deposit/withdrawal part. At the same time, the condition setting of the determining part is changed. The bills are transported again to the determining part. Conditions in the determining part are changed by changing the amplification factor of an amplifier or changing input ranges of an A/D converter. If the bill is determined as an unidentified bill again as a result of bill redetermination, the bill is stored in the temporary stocking part. After information about the bills and the user is recorded in a storing part, an inputted amount is confirmed by the user, and the bills are stored in the storing chamber.

Also when the bill is determined as a false bill, the procedure is executed similarly. A bill determined as an undefined bill in the determining part is transported to the deposit/withdrawal part and returned to the user. A bill determined as a true bill in the determining part is temporarily held in the temporary stocking part. After the user confirms an inputted amount input, the bills are stored in the storing chamber.

In the aforementioned embodiment, False bills and unidentified bills are not returned to the user, and the contents stored in the storing part can be used to trace and locate the user of the False bills at a later date. False bills and unidentified bills may be separately stored in the storing chamber. Although, in the second embodiment, bills determined as unidentified bills again as a result of redetermination are handled as unidentified bills, the number of redeterminations may be increased to three, four, or more.

Next, referring to the configuration of the ATM, a description will be made of another embodiment. With the machine of the previous example, during redetermination, a bill is transported using the transport patt in the vicinity of the deposit/withdrawal part. However, with the machine of the present example , the transport construction is simplified by omitting the transport path.

A deposit/withdrawal part is a place where an ATM user inputs bills. A bill separating part separates inputted bills one by one. There is also a transport path through which bills are transported, and a determining part that determines the denomination of a bill and whether it is true or false. A sensor is placed within the determining part to detect the characteristics of bills. Further, there is a temporary stocking part for temporarily holding bills, a return transport path for returning a bill to the ATM user, a bill storing chamber for storing bills, a reject bill storing chamber for storing bills not suitable for circulation, and a false bill storing chamber that stores bills determined as False bills by the determining part.

Next, a description is made of an embodiment of bill determining processing.

Bills within the deposit/withdrawal part are separated one by one in the separating part, and transported to the determining part. The determining part determines the denomination of the bills and whether they are true or false. If a bill is determined as an unidentified bill by the truth determination, unidentified bill processing is performed. The unidentified bill processing will be described later. If the bill is determined as a false bill in the determining part, the bill is held in the temporary stocking part. After information of the bill and the user is stored in the storing part, an inputted amount is confirmed by the user and the bills are stored in the storing chamber.

If the bill is determined as an undefined bill in the determining part, the bill is transported to the deposit /withdrawal part and returned to the user. A bill determined as a true bill in the determining part is temporarily held in the temporary stocking part, and after an inputted amount is confirmed by the user, the bills are stored in the storing chamber.

Next, a description will be made of unidentified bill processing. If the bill is determined as an unidentified bill in the determining part, the bill is held in the temporary stocking part, and an inputted amount is confirmed by the user. Next, the amplification factor of the amplifier is changed, the input range of the A/C conversion part is changed, and conditions of the determining part are changed. The bill is transported to the determining part, where it is checked for its denomination and to see if it is true or false. In the machine layouts, the transport path between the temporary stocking part and the determining part allows forward and backward transport of bills, and the transport path connecting the determining part and the storing chamber also allows forward and backward transport of bills.

If the bill is determined as a false bill or an unidentified bill, information of the bill and the user is stored , and the bill is stored in the storing chamber. Bills stored in the storing chamber are not used as bills for payment. Bills determined as true bills are stored in the storing chamber and used as bills for payment.

In the present embodiment, since unidentified bills are subjected to redetermination without transporting them to the deposit/withdrawal part, the time for bill input processing can be reduced, with the result that the convenience of the ATM rises.

Next, referring to the sample configuration of the determining part, a description is made of the change of detection conditions during bill redetermination.

Rollers transport a bill while pinching it at both sides. Plural detectors detect the characteristics of the bill. There are various types of detectors, such as those that shine light on a bill from the source of light to detect reflected light from the bill, those that detect transmitted light of a bill, those that detects magnetic ink printed on a bill, and those that detect the thickness of a bill; the present embodiment is not limited to specific detectors. Plural pieces of these detectors may be combined for use. An amplifier amplifies an analog signal detected from the detector. The amplifier can change the amplification factor by a control signal from the control part. The output signal of the amplifier is converted to a digital signal by the A/D converter. The control part controls the amplifier, the A/D converter, and the storing part.

The digital signal from the A/D converter is bill information including image information and stored in the storing part. When a larger voltage than the upper limit value of the A/D converter is inputted, the upper limit value is outputted from the A/D converter, and when a smaller voltage than the lower limit value is inputted to the A/D converter, the lower limit value is outputted. The input between the upper limit value and the lower limit value is converted to a digital signal by the A/D converter and outputted.

The control part determines the denomination and the truth of the bill by use of the bill information stored in the storing part. Thereafter, a deposit operation is performed with a bill transaction machine by use of denomination information and truth information obtained in the control part.

Next, a description is made of an example of changing the detection condition of the determining part.

The following description relates to an example of changing the amplification factor of the output signal of the sensor. In a graph of the output signal, the vertical axis indicates output voltages from the amplifier, and the horizontal axis indicates the positions of a transported bill. There is an upper limit value, and a lower limit value of the input voltages of the A/D converter. A normal amplification factor is set so that the output voltages of the bills of all denominations to be handled fall between the upper limit value and the lower limit value. Such setting enables the control part to determine the truth without the output of the A/D converter being saturated, even for bills for which large output voltages are generated.

However, when this amplification factor is used, for small denominations for which small output voltages are generated, only one part of the range between the upper limit voltage and the lower limit voltage is used. Since the A/D converter divides the range between the upper limit voltage and the lower limit voltage to a predetermined number (e.g. , 256 for 8-bit A/D converter), the level of a weak signal becomes small and the resolution becomes small.

Accordingly, the resolution is increased in the present embodiment. Specifically, when a bill transported with the amplifier set at a normal amplification factor is determined as an unidentified bill and subjected to redetermination, the amplifier is set to an amplification factor corresponding to a denomination determined from denomination determination. In this case, output voltages becomes larger and the resolution improves. As a result, the characteristics of bills can be detected more accurately and the determination capability improves. An output voltage of 30 levels before the amplification factor is changed is increased to 200 levels after the amplification factor is changed, so that an area determined as true bills can be set in detail and determination accuracy improves.

Next, a description will be made of another example of changing the detection condition of the determining part.

Preferably, this example is applied to bills for which an amount of output of the amplifier is obtained.

For such bills, since the output voltage of the amplifier cannot exceed the upper limit voltage, the amplification factor cannot be set so high. Therefore, the aforementioned method yields only small improvement effects. On the other hand, the method of this example changes the input upper limit voltage and the lower limit voltage of the A/D converter.

In a graph of the output signal of this example, the vertical axis indicates output voltages from the amplifier, and the horizontal axis indicates the positions of a transported bill. These is a value newly set as the upper limit voltage by the control part, and a value newly set as the lower limit voltage by the control part. The output voltages of the amplifier when the portion between the upper limit value and the lower limit value is set as an A/D conversion input range. For a bill having a significant range of 30 levels as bill information, the significant range is expanded to 150 levels by narrowing the range between the input upper limit value and the lower limit value of the A/D converter. By performing such setting, the detailed characteristics of the bill can be obtained and the determination accuracy improves.

As described above, the condition change during redetermination in the present invention is made in a form that inputs a bill determined once to the determining part again and changes how to process obtained data. Although a method is conceivable which processes bill data obtained by the first bill transport by operations and performs determination again based on the processed data, the present invention does not employ the method. In short, this is because that the method would fail to increase the accuracy of bill data.

The output voltages of the amplifier are converted by the A/D converter. There is an area determined as true bills, and if a value produced by A/D conversion falls in this area, the control part determines the bill as a true bill. There is also an area determined as unidentified bills, and if a value produced by A/D conversion falls in this area, the control part determines the bill as an unidentified bill. Further, there is an area determined as false bills, and if a value produced by A/D conversion falls in this area, the control part determines the bill as a false bill. The following relates to the output voltages of the amplifier when bills are transported at a normal amplification factor. The output voltages are converted by A/D conversion. Since the A/D converter converts the output voltages of the amplifier to discrete values, the values produced by the A/D conversion cannot correctly reflect the output of the amplifier, causing an error. If the degree of the error and the magnitude of a bill signal are closer to each other, it becomes more difficult to determine bills.

Since the values produced by A/D conversion are in the area determined as an unidentified bill, the bill is determined as unidentified, and in the previous embodiments, the bill is transported again. If the input range of the A/D converter is changed when the bill is transported, another output is obtained. Specifically, by narrowing the A/D conversion input range, the scale of the vertical line (Y axis) becomes narrow and, as a result, converted discrete values become finer. Therefore, the values produced by the A/D conversion are closer to the output voltages of the amplifier. This means that information about the bill has been obtained more faithfully. The boundary between the area determined as true bills and the area determined as false bills can be set finer, and the determination capability can be increased.

On the other hand, a method is conceivable which converts the values obtained during the first transport in the control part to perform redetermination. However, this method cannot increase the accuracy of values produced by A/D conversion. In short, data obtained once cannot be processed into detailed data. For example, making multiplication by a constant (three times) within the control part results in the output value being only tripled ; detailed bill information cannot be obtained.

Since the present invention increases the resolution of sensor output, the determination accuracy can be increased without changing a major change to a determination method and the development of an determination algorithm is eased. The determining part does not need to be optimized to specific denominations and the identical determining part can apply to many denominations, increasing the versatility of the machine.

In the aforementioned embodiments, the examples show the method of changing the amplification factor of the amplifier, and the method of changing the input range of the A/D converter to increase the capability to determine bills. However, both or only one may be adopted as control targets of condition change.

The present invention, without being limited to sheet handling apparatus such as the aforementioned ATM, can also apply to other sheet handling apparatus such as cash exchange machines for lottery bills, and machines for determining the truth of lottery bills and checks in check handling machines.

According to the present invention, by changing the resolution of the determining part for sheets determined as unidentified as a result of determining the truth of sheets, the capability to determine the sheets can be increased. Also, by subjecting unidentified sheets to the determination process again, the capability to reject false bills can be increased.

## Claims

1. A bill handling apparatus comprising:
a detection part for detecting characteristics of a bill transported by a transport module;
an amplifier for amplifying a signal obtained from the detection part;
an A/D converter for converting an analog signal amplified in the amplifier to a digital signal;
means for determining a denomination and truth of the bill by use of a signal having been produced as a result of an A/D conversion by the A/D converter; and
a control part for changing a signal read accuracy of the detection part by changing the amplification factor of the amplifier,
**characterised in that**, if the bill is determined by the determining means as an unidentified bill, i.e. a bill in which characteristics indispensable to true bills were detected but exceed a permissible error, the control part increases the signal read accuracy of the detection part in accordance with an expected denomination, and transports the bill to the detection part so that the determination is performed again in the determining means.

2. The apparatus of claim 1, wherein the control part is adapted to change a range between an input upper limit value and an input lower limit value of the A/D converter.

3. The apparatus of claim 1, wherein the control part is adapted to set conditions so as to narrow the range between the upper limit value and the lower limit value of the A/D converter.

4. A method of determining bills in a bill handling apparatus, comprising the steps of:
sending a bill to a determining part to perform determination;
detecting characteristics of the bill by a detection part;
processing a signal from the detection part and determining a denomination and truth of the bill;
as a result of the truth determination, classifying the bill into one of at least four types of bills to process the bill, the four types of bills being true bills determined as true, false bills lacking characteristics indispensable to true bills, unidentified bills having characteristics indispensable to true bills but exceeding a permissible error thereof, and undefined bills the denominations of which cannot be determined;
if the bill is determined as an unidentified bill, changing an amplification factor of the detection part in accordance with an expected denomination so as to increase the accuracy to determine the bill; and
after the change, sending the unidentified bill to the determining part again to detect the characteristics of the bill in the detection part.

5. The method of claim 4 wherein, as a result of the truth determination, an undefined bill is returned to a user, a bill determined as an unidentified bill and a bill determined as a false bill in another determination are stored in the machine, and a bill determined as an undefined bill in yet another determination is returned to the user.

## Patentansprüche

1. Banknotenverarbeitungsgerät mit
einem Detektionsabschnitt zum Erfassen von Eigenschaften einer durch ein Transportmodul transportierten Banknote,
einem Verstärker zum Verstärken eines von dem Detektionsabschnitt erhaltenen Signals,
einem A/D-Konverter zum Konvertieren eines in dem Verstärker verstärkten Analogsignals in ein Digitalsignal,
einer Einrichtung zum Feststellen des Nennwerts und der Echtheit der Banknote unter Verwendung eines Signals, das als Ergebnis einer A/D-Konversion durch den A/D-Konverter erzeugt wurde, und
einem Steuerabschnitt zum Ändern einer Signallesegenauigkeit des Detektionsabschnitts, indem der Verstärkungsfaktor des Verstärkers geändert wird,
**dadurch gekennzeichnet, daß**, falls die Banknote durch die Bestimmungseinrichtung als nicht identifizierte Banknote bestimmt wird, d.h. als eine Banknote, in der für echte Banknoten unabdingbare Eigenschaften erfaßt wurden aber eine zulässige Fehlergrenze überschreiten, der Steuerabschnitt die Signallesegenauigkeit des Detektionsabschnitts gemäß eines erwarteten Nennwerts erhöht und die Banknote zu dem Erfassungsabschnitt transportiert, so daß die Bestimmung in der Bestimmungseinrichtung erneut durchgeführt wird.

2. Gerät nach Anspruch 1, wobei der Steuerabschnitt dazu ausgelegt ist, einen Bereich zwischen einem eingegebenen oberen Grenzwert und einem eingegebenen unteren Grenzwert des A/D-Konverters zu ändern.

3. Gerät nach Anspruch 1, wobei der Steuerabschnitt dazu ausgelegt ist, Bedingungen einzustellen, so daß der Bereich zwischen dem oberen Grenzwert und dem unteren Grenzwert des A/D-Konverters verengt wird.

4. Verfahren zum Bestimmen von Banknoten in einem Banknotenverarbeitungsgerät, wobei
eine Banknote zu einem Bestimmungsabschnitt gesendet wird, um eine Bestimmung durchzuführen,
Eigenschaften der Banknote durch einen Detektionsabschnitt erfaßt werden,
ein Signal von dem Detektionsabschnitt verarbeitet und der Nennwert und die Echtheit der Banknote bestimmt werden,
die Banknote als ein Ergebnis der Echtheitsbestimmung in eine von wenigstens vier Banknotenarten zum Verarbeiten der Banknote klassifiziert wird, wobei die vier Banknotenarten in echten Banknoten, die als echt bestimmt werden, falschen Banknoten, denen für echte Banknoten unabdingbare Eigenschaften fehlen, nicht identifizierten Banknoten, die für echte Banknoten unabdingbare Eigenschaften aufweisen aber eine zulässige Fehlergrenze dafür überschreiten, und undefinierten Banknoten, deren Nennwerte nicht bestimmt werden können, bestehen,
falls die Banknote als eine nicht identifizierte Banknote bestimmt wird, ein Verstärkungsfaktor des Detektionsabschnitts gemäß einem erwarteten Nennwert geändert wird, um die Genauigkeit zur Bestimmung der Banknote zu erhöhen, und
nach der Änderung die nicht identifizierte Banknote erneut zu dem Bestimmungsabschnitt gesendet wird, um die Eigenschaften der Banknote in dem Detektionsabschnitt zu erfassen.

5. Verfahren nach Anspruch 4, wobei als Ergebnis der Echtheitsbestimmung eine undefinierte Banknote an einen Benutzer zurückgegeben wird, eine als nicht identifizierte Banknote bestimmte und eine in einer anderen Bestimmung als falsche Banknote bestimmte Banknote in der Maschine gespeichert werden, und eine in einer wiederum anderen Bestimmung als undefinierte Banknote bestimmte Banknote an den Benutzer zurückgegeben wird.

## Revendications

1. **Dispositif de manipulation de billets, com**portant :
une partie de détection pour détecter des caractéristiques d'un billet transporté par un module de transport,
un amplificateur pour amplifier un signal obtenu à partir de la partie de détection,
un convertisseur A/N pour convertir un signal analogique amplifié dans l'amplificateur en signal numérique,
des moyens pour déterminer une valeur et une authenticité du billet par utilisation d'un signal ayant été produit en résultat d'une conversion A/N par le convertisseur A/N, et
une partie de commande pour changer une précision de lecture de signal de la partie de détection en changeant le facteur d'amplification de l'amplificateur,
**caractérisé en ce que**, si le billet est déterminé par les moyens de détermination comme étant un billet non identifié, c'est-à-dire un billet dans lequel des caractéristiques indispensables pour des billets authentiques ont été détectées mais ont dépassé une erreur permise, la partie de commande augmente la précision de lecture de signal de la partie de détection conformément à une valeur attendue, et transporte le billet vers la partie de détection de sorte que la détermination est effectuée à nouveau dans les moyens de détermination.

2. Dispositif selon la revendication 1, dans lequel la partie de commande est adaptée pour changer une plage entre une valeur de limite supérieure d'entrée et une valeur de limite inférieure d'entrée du convertisseur A/N.

3. Dispositif selon la revendication 1, dans lequel la partie de commande est adaptée pour fixer des conditions de manière à rétrécir la plage entre la valeur de limite supérieure et la valeur de limite inférieure du convertisseur A/N.

4. Procédé de détermination de billets dans un dispositif de manipulation de billets, comportant les **étapes consistant à :**
envoyer un billet jusqu'à une partie de détermination pour effectuer une détermination,
détecter des caractéristiques du billet par une partie de détection,
traiter un signal provenant de la partie de détection et déterminer une valeur et une authenticité du billet,
en résultat de la détermination d'authenticité, classer le billet dans un type parmi au moins quatre types de billets pour traiter le billet, les quatre types de billets étant des billets authentiques déterminés comme authentiques, des faux billets n'ayant pas les caractéristiques indispensables pour des billets authentiques, des billets non identifiés ayant des caractéristiques indispensables pour des billets authentiques mais dépassant une erreur permise de celles-ci, et des billets indéfinis dont les valeurs ne peuvent pas être déterminées,
si le billet est déterminé comme un billet non identifié, changer un facteur d'amplification de la partie de détection conformément à une valeur attendue de manière à augmenter la précision pour déterminer le billet, et
après le changement, envoyer le billet non identifié dans la partie de détermination pour détecter à nouveau les caractéristiques du billet dans la partie de détection.

5. Procédé selon la revendication 4, dans lequel, en résultat de la détermination de l'authenticité, un billet indéfini est renvoyé à un utilisateur, un billet déterminé comme un billet non identifié et un billet déterminé comme étant un faux billet dans une autre détermination sont stockés dans la machine, et un billet déterminé comme un billet indéfini dans encore une autre détermination est renvoyé à l'utilisateur.
